# EUROPÄISCHE PATENTANMELDUNG

(11) **EP 4 360 841 A1**
(43) Veröffentlichungstag der Anmeldung: **01.05.2024**
(21) Anmeldenummer: 23202898.5
(22) Anmeldetag: 11.10.2023
(51) Int. Cl.: B29B 7/18, B29B 7/22, B29B 7/24, B29B 7/74

(54) **VORRICHTUNG UND VERFAHREN ZUM MISCHEN EINER KAUTSCHUKMISCHUNG**

(30) Priorität: 28.10.2022 DE 102022211476
(71) Anmelder: Continental Reifen Deutschland GmbH, 30175 Hannover (DE)
(72) Erfinder: Kuck, Detlef, 30165 Hannover (DE); Dr. Schramm, Oliver, 30165 Hannover (DE)
(74) Vertreter: Continental Corporation

(57) **Zusammenfassung**

Die vorliegende Offenbarung betrifft eine Vorrichtung (10) zum Mischen von Kautschukmischungen, umfassend eine Mischkammer (20), eine Stempeleinheit (30), welche relativ zur Mischkammer (20) entlang einer Längsrichtung (L) beweglich ist und ausgebildet ist, um die Mischkammer (20) zu verschließen. Weiterhin umfasst die Vorrichtung (10) ein Übertragungselement (40), welches mit der Stempeleinheit (30) gekoppelt ist und ausgebildet ist, um eine mechanische Kraft auf die Stempeleinheit (30) zu übertragen, und somit die Stempeleinheit (30) entlang der Längsrichtung (L) zu bewegen, und eine Antriebseinheit (50), welche mit dem Übertragungselement (40) gekoppelt ist und ausgebildet ist, um eine mechanische Kraft auf das Übertragungselement (40) auszuüben.

## Beschreibung

Die vorliegende Offenbarung betrifft eine Vorrichtung zum Mischen von Kautschukmischungen. Die vorliegende Offenbarung betrifft ferner ein Verfahren zum Betreiben einer Vorrichtung zum Herstellen einer Kautschukmischung.

In bekannten Mischvorrichtungen, welche auch als Innenmischer oder Stempelkneter bekannt sind, wird der Stempel eines Innenmischers vorzugsweise hydraulisch bewegt. Auch pneumatisch betätigte Stempel sind im Einsatz. In jedem Fall erfolgt die Auf- und Abwärtsbewegung des Stempels über einen oder mehrere Zylinder, die mit einem Medium, Öl oder Luft, betrieben werden.

Es ist wünschenswert ein Verfahren zum Betreiben einer Vorrichtung zum Mischen von Kautschukmischungen zu schaffen, welches einen geringeren Energiebedarf zum Betreiben aufweist und einen zuverlässigen Betrieb der Vorrichtung mit möglichst wenigen Ausfällen ermöglicht.

Diese Aufgabe wird durch die Vorrichtung zum Mischen von Kautschukmischungen gemäß Anspruch 1 sowie das Verfahren zum Betreiben der Vorrichtung zum Mischen von Kautschukmischungen gemäß Anspruch 7 gelöst.

Weitere Ausgestaltungen sind in den abhängigen Ansprüchen angegeben.

Hierzu werden zum Beispiel alle hydraulischen und pneumatischen Aktoren durch mechanische Antriebe ersetzt.

Gemäß einer Ausführungsform umfasst eine Vorrichtung zum Mischen von Kautschukmischungen eine Mischkammer, eine Stempeleinheit, welche relativ zur Mischkammer entlang einer Längsrichtung beweglich ist und ausgebildet ist, um die Mischkammer zu verschließen. Weiterhin umfasst die Vorrichtung ein Übertragungselement, welches mit der Stempeleinheit gekoppelt ist und ausgebildet ist, um eine mechanische Kraft auf die Stempeleinheit zu übertragen und somit die Stempeleinheit entlang der Längsrichtung zu bewegen. Das Übertragungselement ist mit einer Antriebseinheit gekoppelt, welche ausgebildet ist, um eine mechanische Kraft auf das Übertragungselement auszuüben.

Die Antriebseinheit wandelt dabei eine rotatorische Bewegung in eine translatorische Bewegung um.

Gemäß einer weiteren Ausführungsform weist das Übertragungselement eine Spindel auf und die Antriebseinheit weist einen Spindelantrieb auf.

Durch die Verwendung mechanischer Komponenten in Form einer Spindel und eines Spindelantriebs anstelle von pneumatisch betriebenen Stempeln wird der Energieverbrauch zum Betreiben der Vorrichtung gesenkt.

Gemäß einer weiteren Ausführungsform umfasst die Stempeleinheit ein Verbindungselement. Mittels des Verbindungselements ist die Stempeleinheit mit dem Übertragungselement gekoppelt. Die Stempeleinheit weist weiterhin einen Stempelkopf auf, welcher der Mischkammer zugewandt ist. Zwischen dem Verbindungselement und dem Stempelkopf ist ein Kopplungselement angeordnet, welches für eine Relativbewegung entlang der Längsrichtung ausgebildet ist. Das Kopplungselement ist mit dem Verbindungselement und dem Stempelkopf gekoppelt.

Gemäß einer weiteren Ausführungsform weist das Kopplungselement eine Druckfeder auf.

Durch Einsatz einer Druckfeder zwischen Spindel und Stempeleinheit, werden Kräfte die auf die Spindel aus Richtung der Mischkammer wirken, zumindest gedämpft. Eine aufwendige Steuerung und Speichermedien, wie z.B. Öl in hydraulisch betriebenen Stempeln, entfallen. Somit wird ebenfalls verhindert, dass es durch die schnellen Stempelbewegungen z.B. zur Überhitzung des Öls kommt und damit verbunden auch zu Ausfällen von Bauteilen.

Gemäß einer weiteren Ausführungsform umfasst die Mischkammer ein Mischkammervolumen, mindestens zwei Rotoren zum Kneten von Mischgut, eine Kühlvorrichtung zum Kühlen der Mischkammer, eine Einfüllöffnung und eine Auswurföffnung.

Gemäß einer weiteren Ausführungsform umfasst die Vorrichtung einen Beschickungsschacht zum Befüllen der Mischkammer.

Der Beschickungsschacht ist über der Mischkammer und seitlich zum Übertragungselement angeordnet, um einen möglichst kompakten Aufbau der Vorrichtung zu ermöglichen.

Gemäß einer Ausführungsform weist das Verfahren zum Betreiben einer Vorrichtung zum Herstellen einer Kautschukmischung folgende Schritte auf.

Befüllen einer Mischkammer mit Mischgut über einen Beschickungsschacht. Anschließend wird die Stempeleinheit in Längsrichtung abwärtsbewegt, so dass die Stempeleinheit die Mischkammer über eine Einfüllöffnung verschließt und in Kontakt mit dem Mischgut gelangt.

Danach wird das Mischguts in einem Mischkammervolumen mittels mindestens zwei Rotoren geknetet. Währenddessen wird die Stempeleinheit in Längsrichtung abwärtsbewegt, um das Mischgut in Richtung der Rotoren runterzudrücken.

Dadurch wird verhindert, dass das Mischgut aus der Mischkammer dringt und gleichzeitig wird gewährleistet, dass das Mischgut durch die Stempeleinheit möglichst nah zu den Rotoren hingedrückt wird. Dieses Vorgehen spart weitere Bauteile, welche die Mischkammer ansonsten zusätzlich schließen müssten.

Weiterhin wird ein Stempelkopf entgegen der Längsrichtung relativ zu den Rotoren aufwärtsbewegt, um eine Kraft, welche auf ein Übertragungselement wirkt, abzudämpfen.

Dieser Verfahrensschritt ermöglicht es, dass keine unnötige Belastung auf das Übertragungselement wirkt und verhindert somit mögliche Ausfälle von Bauteilen. Gemäß einer weiteren Ausführungsform des Verfahrens wird der Stempelkopf betragsmäßig weiter in Längsrichtung abwärtsbewegt als entgegen der Längsrichtung aufwärtsbewegt.

Gemäß einer weiteren Ausführungsform des Verfahrens wird die Stempeleinheit im Wesentlichen kontinuierlich in Längsrichtung bewegt.

Die im Wesentlichen kontinuierliche Bewegung der Stempeleinheit in Längsrichtung bietet den Vorteil, dass die Stempeleinheit in ihrer Bewegung nicht ins Stocken gerät. Somit wird ein Mischvorgang schneller abgeschlossen und das Verfahren ist schonender für die Bauteile.

Gemäß einer weiteren Ausführungsform wird die Druckfeder während der Aufwärtsbewegung des Stempelkopfes entgegen der Längsrichtung komprimiert, wenn die Kraft, welche die Rotoren über das Mischgut auf die Stempeleinheit ausüben, und welche weg von den Rotoren gerichtet ist, größer ist als eine Rückstellkraft der Druckfeder, welche auf den Stempelkopf ausgeübt und hin zu den Rotoren gerichtet ist.

Die Auf- und Abwärtsbewegung des Stempels kann durch einen Spindelantrieb ausgeführt werden. Dieser kann aber nicht schnell genug auf die Verwerfungen des Mischguts innerhalb der Mischkammer durch die Rotoren reagieren und entsprechend ausweichen. Aus diesem Grund ist der Stempel nicht starr mit der Spindel verbunden sondern beispielsweise über eine Druckfeder. Diese Druckfeder erlaubt das Ausweichen des Stempels bei unveränderter Spindelposition, wenn die Rotoren das Mischgut gegen den Stempel drücken.

Die Erfindung wird im Folgenden anhand von Figuren näher erläutert.

Es zeigen:
- Figur 1: ein Ausführungsbeispiel einer Vorrichtung zur Herstellung einer Kautschukmischung in einer schematischen Ansicht,
- Figur 2: Flussdiagramm eines Verfahrens zum Betreiben einer Vorrichtung zur Herstellung einer Kautschukmischung.

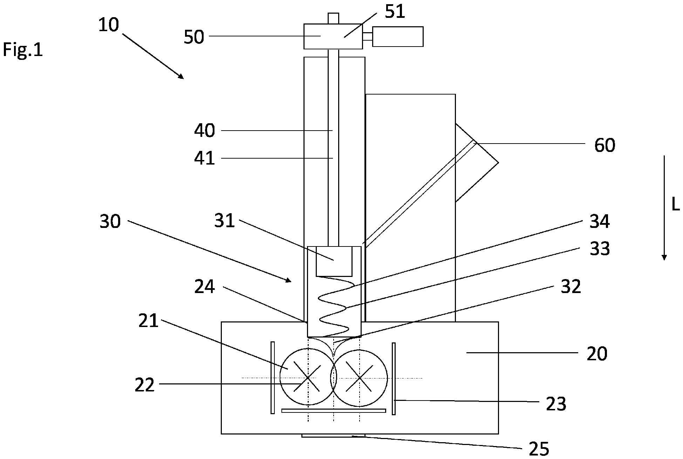

Weitere Merkmale, Vorteile und Einzelheiten der Erfindung werden nun anhand der Fig. 1, welche eine vereinfachte schematische Darstellung einer Vorrichtung zur Herstellung einer Kautschukmischung zeigt, näher beschrieben.

Figur 1 zeigt in einer schematischen Ansicht eine Vorrichtung 10 zum Mischen von Kautschukmischungen. Die Vorrichtung 10 umfasst eine Mischkammer 20. Die Mischkammer 20 umfasst ein Mischkammervolumen 21, welches geeignet ist um Mischgut aufzunehmen. Innerhalb des Mischkammervolumens 21 sind mindestens zwei Rotoren 22 zum Kneten des Mischguts angeordnet. Weiterhin umfasst die Mischkammer 20 eine Kühlvorrichtung 23 zum Kühlen der Mischkammer 20 und der Rotoren 22. Auch andere Elemente zum Kneten und/oder Kühlen sind alternativ oder zusätzlich möglich. Die Mischkammer 20 wird an ihrem oberen Rand durch eine Einfüllöffnung 24 und an ihrem unteren Rand durch eine Auswurföffnung 25 begrenzt. Die Strecke von der Einfüllöffnung 24 hin zur Auswurföffnung 25 definiert dabei eine Längsrichtung L.

Die Vorrichtung 10 zum Mischen von Kautschukmischungen umfasst weiterhin eine Stempeleinheit 30, welche relativ zur Mischkammer 20 entlang der Längsrichtung L beweglich ist und wobei die Stempeleinheit 30 dazu ausgebildet ist die Mischkammer 20 zu verschließen.

Die Stempeleinheit 30 ist mit einem Übertragungselement 40 gekoppelt. Das Übertragungselement 40 ist dazu ausgebildet eine mechanische Kraft auf die Stempeleinheit 30 zu übertragen und somit die Stempeleinheit entlang der Längsrichtung L zu bewegen.

Das Übertragungselement 40 ist weiterhin mit einer Antriebseinheit 50 gekoppelt. Die Antriebseinheit 50 übt eine mechanische Kraft auf das Übertragungselement 40 aus. Diese mechanische Kraft wird über das Übertragungselement auf die Stempeleinheit 30 übertragen.

Eine Ausführungsform des Übertragungselements 40 kann eine Spindel 41 sein und als Antriebseinheit 50 kann ein Spindelantrieb 51 verwendet werden.

Die Antriebseinheit 50 kann ebenso als elektrischer, mechanischer oder als elektromechanischer Antrieb ausgebildet sein.

Die Stempeleinheit 30 umfasst ein Verbindungselement 31 mittels dessen die Stempeleinheit 30 mit dem Übertragungselement 40 gekoppelt ist.

Eine Kopplung des Übertragungselements 40 mit dem Verbindungselement 31 kann durch z.B. eine Verschraubung, Vernietung, Verschweißung oder sonstige formschlüssige, kraftschlüssige oder stoffschlüssige Verbindung erfolgen. Alternativ kann das Verbindungselement 31 selbst z.B. als Niete, Schraube, Schweißnaht oder dergleichen ausgebildet sein.

Weiterhin umfasst die Stempeleinheit 30 einen Stempelkopf 32, welcher der Mischkammer 20 zugewandt ist und mit dem Mischgut in Kontakt gelangen kann. Der Stempelkopf 32 weist dabei eine Form auf, die es ermöglicht, dass die Stempeleinheit 30 beim Abwärtsbewegen in Längsrichtung L möglichst weit in die Mischkammer 20 gelangt, und somit in die Nähe der Rotoren 22, ohne mit den Rotoren 22 in Kontakt zu kommen. Damit wird erreicht, dass das Mischgut möglichst nah an die Rotoren 22 gedrückt wird, um eine gute Durchmischung zu ermöglichen.

Bei einem Mischkammervolumen 21, welches im Querschnitt die Form von zwei nebeneinander angeordneten, kreisrunden Hohlräumen aufweist, kann der Stempelkopf 32 z.B. derart ausgebildet sein, dass die Flächen des Stempelkopfes 32 Viertelkreisen entsprechen und somit komplementär zu den kreisrunden Hohlräumen sind.

Zwischen dem Verbindungselement 31 und dem Stempelkopf 32 ist ein Kopplungselement 33 angeordnet, welches mit dem Verbindungselement 31 und dem Stempelkopf 32 gekoppelt ist. Das Kopplungselement 33 ist für eine Relativbewegung entlang der Längsachse L ausgebildet.

Durch die zusätzliche Relativbewegung, wird das Übertragungselement 40 nicht zu stark beansprucht, so dass es beschädigt oder zerstört wird.

Als Kopplungselement 33 kann eine Druckfeder 34 verwendet werden, welche eine Rückstellkraft aufweist. Im Ausgangszustand ist die Druckfeder 34 entspannt und kann komprimiert werden. Bei entsprechender Belastung der Stempeleinheit 30 ausgelöst durch das Mischgut, wird die Druckfeder 34 komprimiert und der Stempelkopf 31 weg von den Rotoren 22 entgegen der Längsrichtung L bewegt. Durch die Rückstellkraft der Druckfeder 34 kann die Druckfeder 34 bei abnehmender Belastung ausgelöst durch das Mischgut in ihren Ausgangszustand zurückkehren.

Die Druckfeder 34 kann als zylindrische Druckfeder ausgeformt sein, welche an einem Ende über das Verbindungselement 31 mit der Spindel 41 gekoppelt ist. Das zweite Ende der Druckfeder 34 ist mit dem Stempelkopf 32 gekoppelt.

Die zylindrische Druckfeder 34 ermöglicht, dass in sicherheitskritischen Anwendungen, bei entsprechender konstruktiver Gestaltung ein Bruch der Feder dazu führt, dass nur eine Federwindung weniger die Federkraft aufbringt, sodass der Großteil der Federwirkung erhalten bleibt.

Die Druckfeder 34 ermöglicht, dass bei Verwerfungen des Mischguts der Stempelkopf 32 entgegen der Längsrichtung L aufwärtsbewegt wird. Damit wird verhindert, dass auf das Übertragungselement 40, eine Kraft aus Richtung der Rotoren entgegen der Längsrichtung L wirkt. Da das Übertragungselement 40 als starres Bauteil ausgebildet ist, kann das Übertragungselement weder nachgeben noch ausweichen. Durch die Druckfeder 34 wird verhindert, dass es zu Beschädigung oder Zerstörung des Übertragungselements 40, der Antriebseinheit 50 der Stempeleinheit 30 oder der Rotoren 22 kommt. Um die Kraft zu kompensieren mit welcher die Rotoren 22 über das Mischgut den Stempelkopf 32 entgegen der Längsrichtung L weg von den Rotoren 22 drücken, wird die Druckfeder 34 verwendet. Die Druckfeder 34 wird komprimiert, um die nach oben gerichtete Kraft der Rotoren 22 abzudämpfen. Die Druckfeder 34 wird nur dann komprimiert, wenn die Kraft, welche die Rotoren 22 über das Mischgut auf die Stempeleinheit 30 ausüben, und welche weg von den Rotoren 22 gerichtet ist, größer ist als eine Rückstellkraft der Druckfeder 34, welche auf den Stempelkopf 32 ausgeübt und in Längsrichtung L hin zu den Rotoren 22 gerichtet ist. Während die Druckfeder 34 komprimiert wird, bewegt sich die Stempeleinheit 30 weiter in Längsrichtung L, um das Mischgut weiterhin den Rotoren 22 zuzuführen. Somit ist die Bewegung der Stempeleinheit 30 in Längsrichtung L im Wesentlichen kontinuierlich.

Die Vorrichtung 10 zum Mischen von Kautschukmischungen umfasst weiterhin einen Beschickungsschacht 60. Der Beschickungsschacht 60 ist über der Mischkammer 20 und seitlich zum Übertragungselement 40 angeordnet, um einen möglichst kompakten Aufbau der Vorrichtung 10 zu ermöglichen. Über den Beschickungsschacht 60 wird der Vorrichtung 10 Mischgut zugeführt, welches an der Stempeleinheit 30 vorbeikommen muss. Dazu muss die Stempeleinheit 30 entgegen der Längsrichtung L hochbewegt werden. Befüllt wird die Mischkammer 20 der Vorrichtung 10 über die Einfüllöffnung 24. Ist die Befüllung abgeschlossen, kann die Stempeleinheit 30 in Längsrichtung L gesenkt und die Mischkammer 20 geschlossen werden. Im Inneren der Mischkammer 20 befinden sich zwei gegenläufige Rotoren 22, durch die die Stempeleinheit 30 das Mischgut drückt. Durch die Wärmedissipation entstehen die zur Mischungsherstellung nötigen Temperaturen. Damit die Temperatur nicht zu hoch wird, werden die Mischkammer 20 und die Rotoren 22 mittels der Kühlvorrichtung 23 beispielsweise permanent gekühlt. Die Kühlung ist sehr wichtig, damit das Mischgut (mit Vernetzern und Additiven) nicht anvulkanisiert. Gegen Ende des Mischvorgangs wird das Mischgut unter laufenden Rotoren 22 über die Auswurföffnung 25 entleert.

Die Vorrichtung und das Verfahren können generell für die Herstellung von Kautschukmischungen verwendet werden. Eine weitere mögliche Anwendung ist z.B. an der Walzenspaltverstellung von Kalanderrollen und Walzwerken.

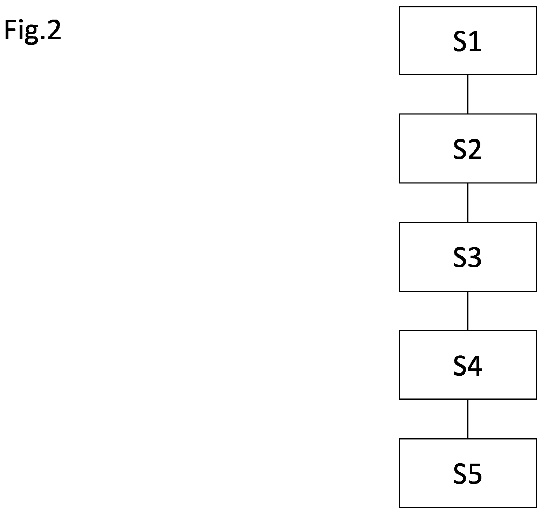

Fig. 2 zeigt Verfahrensschritte zum Herstellen einer Kautschukmischung anhand eines Flussdiagramms. Insbesondere wird die Vorrichtung 10 mit dem beschriebenen Verfahren betrieben. Die einzelnen Verfahrensschritte erfolgen nicht zwingend konsekutiv und können auch gleichzeitig erfolgen oder ineinander übergehen. Insbesondere die reaktiven Auf- und Abbewegungen der Stempeleinheit 30 und des Stempelkopfes 32 erfolgen im Wesentlichen simultan oder kaum zeitverzögert. Damit wird gewährleistet, dass möglichst keine Schäden an der Vorrichtung 10 entstehen.

In Schritt S1 wird die Vorrichtung 10 über einen Beschickungsschacht 60 mit Mischgut befüllt. Damit das Mischgut in die Mischkammer 20 gelangen kann, ist die Stempeleinheit 30 entgegen der Längsrichtung L hochgefahren.

In Schritt S2 wird die Befüllung abgeschlossen und die Stempeleinheit 30 kann in Längsrichtung L herabgefahren und die Mischkammer 20 über die Einfüllöffnung 24 geschlossen werden. Durch die Abwärtsbewegung gelangt die Stempeleinheit 30 in Kontakt mit dem Mischgut.

In Schritt S3 wird das Mischgut im Mischkammervolumen 21 mittels der mindestens zwei Rotoren 2 durchgeknetet.

In Schritt S4 wird die Stempeleinheit 30 in Längsrichtung L hin zu den Rotoren 22 abwärtsbewegt, um das Mischgut möglichst nahe an die Rotoren 22 zu drücken. Somit wird ein optimales Durchkneten des Mischguts erreicht.

In Schritt S5 wird der Stempelkopf 32 entgegen der Längsrichtung L aufwärtsbewegt. Dabei wird das Kopplungselement 33, welches z.B. als Druckfeder 34 ausgebildet ist, verwendet, in dem z.B. die Druckfeder 34 komprimiert wird. Während der Aufwärtsbewegung des Stempelkopfs 32 bewegt sich die Stempeleinheit 30 im Wesentlichen weiter in Längsrichtung L.

Somit wird sichergestellt, dass keine Kräfte auf das Übertragungselement 40 wirken, welche die Vorrichtung 10 beschädigen oder zerstören könnten, oder zumindest abgedämpft werden, so dass die Vorrichtung 10 weder beschädigt noch zerstört wird.

Zudem bietet das Verfahren eine alternative Möglichkeit solch eine Vorrichtung 10 zu betreiben an, ohne auf eine komplizierte Steuerung und Regelung zurückzugreifen, wie bei hydraulischen Antrieben, oder hohe Energie aufzuwenden wie bei z.B. pneumatischen Antrieben.

Alle Merkmale, Vorteile und Einzelheiten, welche für die Vorrichtung 10 gelten, sind auf das Verfahren zum Betreiben der Vorrichtung 10 übertragbar und umgekehrt.

### Bezugszeichenliste

- 10: Vorrichtung zum Mischen von Kautschukmischungen
- 20: Mischkammer
- 21: Mischkammervolumen
- 22: Rotoren
- 23: Kühlvorrichtung
- 24: Einfüllöffnung
- 25: Auswurföffnung
- 30: Stempeleinheit
- 31: Verbindungselement
- 32: Stempelkopf
- 33: Kopplungselement
- 34: Druckfeder
- 40: Übertragungselement
- 41: Spindel
- 50: Antriebseinheit
- 51: Spindelantrieb
- 60: Beschickungsschacht

- L: Längsrichtung

## Patentansprüche

1. Vorrichtung (10) zum Mischen einer Kautschukmischung, umfassend
- eine Mischkammer (20),
- eine Stempeleinheit (30), welche relativ zur Mischkammer (20) entlang einer Längsrichtung (L) beweglich ist und ausgebildet ist, um die Mischkammer (20) zu verschließen,
- ein Übertragungselement (40), welches mit der Stempeleinheit (30) gekoppelt ist und ausgebildet ist, um eine mechanische Kraft auf die Stempeleinheit (30) zu übertragen, und somit die Stempeleinheit (30) entlang der Längsrichtung (L) zu bewegen, und
- eine Antriebseinheit (50), welche mit dem Übertragungselement (40) gekoppelt ist und ausgebildet ist, um eine mechanische Kraft auf das Übertragungselement (40) auszuüben.

2. Vorrichtung (10) nach Anspruch 1, wobei
- das Übertragungselement (40) eine Spindel (41) aufweist und
- die Antriebseinheit (50) einen Spindelantrieb (51) aufweist.

3. Vorrichtung (10) nach Anspruch 1 oder 2, wobei die Stempeleinheit (30) umfasst
- ein Verbindungselement (31) mittels dessen die Stempeleinheit (30) mit dem Übertragungselement (40) gekoppelt ist,
- einen Stempelkopf (32), welcher der Mischkammer (20) zugewandt ist und
- ein Kopplungselement (33), welches
- für eine Relativbewegung entlang der Längsrichtung (L) ausgebildet ist,
- zwischen dem Verbindungselement (31) und dem Stempelkopf (32) angeordnet ist und
- mit dem Verbindungselement (31) und dem Stempelkopf (32) gekoppelt ist.

4. Vorrichtung (10) nach Anspruch 3, wobei
- das Kopplungselement (33) eine Druckfeder (34) aufweist.

5. Vorrichtung (10) nach einem der vorhergehenden Ansprüche, wobei die Mischkammer(20) umfasst
- ein Mischkammervolumen (21),
- mindestens zwei Rotoren (22) zum Kneten von Mischgut,
- eine Kühlvorrichtung (23) zum Kühlen der Mischkammer (20),
- eine Einfüllöffnung (24) und
- eine Auswurföffnung (25).

6. Vorrichtung (10) nach einem der vorhergehenden Ansprüche, wobei
- die Vorrichtung (10) einen Beschickungsschacht (60) zum Befüllen der Mischkammer (20) umfasst, wobei der Beschickungsschacht (60) über der Mischkammer (20) und seitlich zum Übertragungselement (40) angeordnet ist.

7. Verfahren zum Herstellen einer Kautschukmischung, wobei das Verfahren die Schritte umfasst
- Befüllen einer Mischkammer (20) mit Mischgut,
- Abwärtsbewegen einer Stempeleinheit (30) in Längsrichtung (L), so dass die Stempeleinheit (30) die Mischkammer (20) über eine Einfüllöffnung (24) verschließt und in Kontakt mit dem Mischgut gelangt,
- Kneten des Mischguts in einem Mischkammervolumen (21),
- weiteres Abwärtsbewegen der Stempeleinheit (30) in Längsrichtung (L), um das Mischgut in Richtung der Rotoren (22) zu drücken,
- Aufwärtsbewegen eines Stempelkopfes (32) entgegen der Längsrichtung (L) relativ zu den Rotoren, um eine Kraft, welche entgegen der Längsrichtung (L) auf ein Übertragungselement (40) wirkt, abzudämpfen.

8. Verfahren nach Anspruch 7, wobei
- der Stempelkopf (32) betragsmäßig weiter in Längsrichtung (L) abwärtsbewegt wird als entgegen der Längsrichtung (L) aufwärtsbewegt wird.

9. Verfahren nach Anspruch 7 oder 8, wobei das weitere Abwärtsbewegen umfasst
- Abwärtsbewegen der Stempeleinheit (30) im Wesentlichen kontinuierlich in Längsrichtung (L).

10. Verfahren nach einem der Ansprüche 7 bis 9, wobei das Verfahren den Schritt umfasst
- Komprimieren der Druckfeder (34) während des Aufwärtsbewegens des Stempelkopfes (32), wenn die Kraft, welche die Rotoren (22) über das Mischgut auf die Stempeleinheit (30) ausüben, und welche weg von den Rotoren (22) gerichtet ist, größer ist als eine Rückstellkraft der Druckfeder (34), welche auf den Stempelkopf (32) ausgeübt und hin zu den Rotoren (22) gerichtet ist.
